# EUROPÄISCHE PATENTSCHRIFT

(11) **EP 1 682 802 B1**
(45) Veröffentlichungstag und Bekanntmachung des Hinweises auf die Patenterteilung: **08.10.2008**
(21) Anmeldenummer: 04802637.1
(22) Anmeldetag: 23.10.2004
(51) Int. Cl.: F16K 31/06

(54) **VENTIL ZUM STEUERN VON FLUIDEN MIT MULTIFUNKTIONALEM BAUTEIL**
VALVE FOR CONTROLLING FLUIDS, COMPRISING A MULTIFUNCTIONAL COMPONENT
SOUPAPE SERVANT A COMMANDER LE PASSAGE DE FLUIDES, COMPORTANT UN ELEMENT MULTIFONCTIONNEL

(30) Priorität: 07.11.2003 DE 10352003
(43) Veröffentlichungstag der Anmeldung: 26.07.2006
(73) Patentinhaber: ROBERT BOSCH GMBH, 70442 Stuttgart (DE)
(72) Erfinder: SCHRADE, Andreas, 87509 Immenstadt (DE)
(86) Internationale Anmeldenummer: PCT/DE2004/002365
(87) Internationale Veröffentlichungsnummer: WO 2005/045290

(56) Entgegenhaltungen:
- EP-A- 0 924 482
- EP-A- 1 357 322
- DE-A1- 3 924 814
- DE-A1- 4 035 817
- GB-A- 2 117 872
- US-A- 5 344 118
- US-B1- 6 189 983
- US-B1- 6 345 870

## Beschreibung

### Stand der Technik

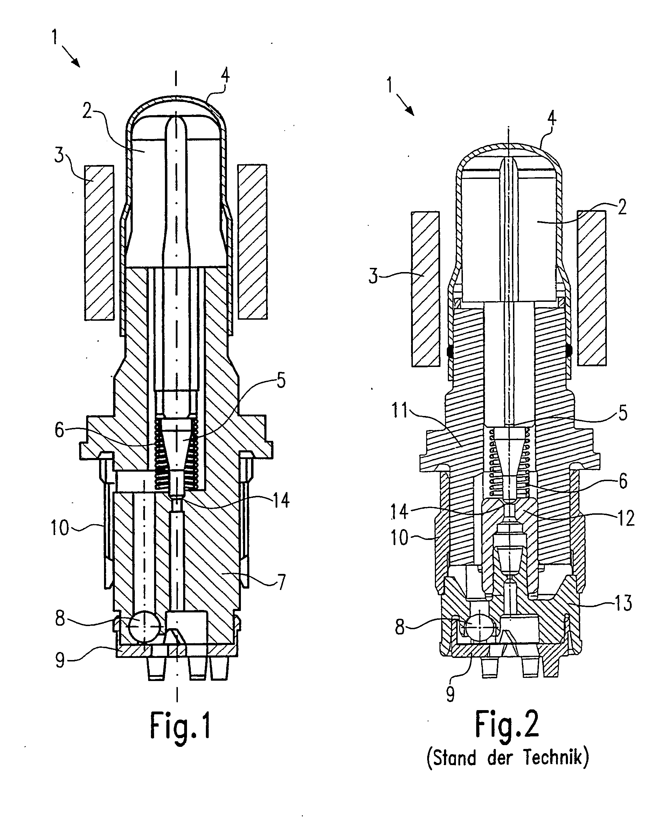

Die vorliegende Erfindung betrifft ein elektromagnetisches Ventil zum Steuern von Fluiden, insbesondere für Hydrauliksysteme in Fahrzeugen. Derartige Ventile sind aus dem Stand der Technik in unterschiedlichen Ausgestaltungen bekannt. Figur 2 zeigt dabei ein bekanntes elektromagnetisches Ventil gemäß dem Stand der Technik. Das Ventil 1 umfasst einen Anker 2, welcher mit einem als Stößel ausgebildeten Betätigungselement verbunden ist und in bekannter Weise mittels einer Magnetspule 3 bewegt werden kann. Der Anker 2 ist dabei in bekannter Weise innerhalb einer Hülse 4 bewegbar. Die Hülse 4 ist mit einem Ventileinsatz 11 verbunden, welcher als Führungselement für das Betätigungselement 5 dient. Eine Rückstellfeder 6 stellt das Betätigungselement 5 in seine Ausgangsposition zurück. Weiterhin umfasst das bekannte Ventil einen Ventilkörper 12, in welcher ein durch das Ventil zu verschließende bzw. freizugebender Durchlass 14 angeordnet ist, sowie einen Kunststoffeinsatz 13 mit einer Drosseleinrichtung. Zur Verhinderung der Verschmutzung des Ventils 1 sind weiter zwei Filter 9 und 10 vorgesehen. Über ein Rückschlagventil 8 kann ein eventuell auftretender Überdruck im Ventil angebaut werden. Im stromlosen Zustand ist das Ventil ständig geöffnet.

Nachteilig an diesem bekannten Ventil 1 ist, dass der Aktivteil des Ventils aus mehreren einzelnen Bauelementen wie dem Ventileinsatz 11, dem Ventilkörper 12 und dem Kunststoffeinsatz 13 besteht. Dadurch ergibt sich eine erhöhte Teilezahl und eine aufwendige Montage. Weiterhin kann insbesondere die Verwendung von Kunststoff für den Kunststoffeinsatz 13 im Falle von steigender Belastung bzw. über die Lebensdauer zu Beschädigungen führen. Dies ist insbesondere deshalb von großer Bedeutung, da die neueren und zukünftigen Hydrauliksysteme in Fahrzeugen mit immer höheren Drücken arbeiten.

Aus der US 6, 345, 870 ist bereits ein Magnetventil für eine Hydraulikeinheit bekannt. Ein Ventil zum Steuern von Fluiden umfasst ein Bauteil, welches Funktionen eines Ventileinsatzes, Ventilkörpers und Drosselbauteils in einem einzigen Bauteil vereint.

Weitere Ventile dieser Art sind aus den Druckschriften EP 0 924 482 und DE 3 924 814 bereits bekannt.

### Vorteile der Erfindung

Das erfindungsgemäße Ventil zum Steuern von Fluiden mit den Merkmalen des Patentanspruchs 1 weist demgegenüber den Vorteil auf, dass es besonders kostengünstig herstellbar ist und nur eine geringe Teileanzahl aufweist. Dadurch können auch die Montagekosten für das Ventil verringert werden, was besonders große Kostenvorteile bringt, da es sich bei Ventilen um Massenartikel handelt. Erfindungsgemäß wird dies dadurch erreicht, dass das Ventil ein Multifunktionsbauteil aufweist, welches mehrere Bauteile in sich integriert und deren Funktionen übernimmt. Insbesondere übernimmt das Multifunktionsbauteil die Funktion des Ventileinsatzes zum Führen des Betätigungselements, die Funktion des Ventilkörpers, in welchem die freizugebende bzw. zu verschließende Öffnung angeordnet ist, und die Funktion eines Drosselbauteils. Das multifunktionale Bauteil kann somit mehrere bisher verwendete Einzelbauteile im Ventil ersetzen.

Die Unteransprüche zeigen bevorzugte Weiterbildungen der Erfindung.

Das multifunktionale Bauteile umfasst noch eine Funktion für ein Rückschlagventil, über welches ein eventuell vorhandener Überdruck abgebaut werden kann.

Das multifunktionale Bauteil ist mittels eines pulvermetallurgischen Verfahrens hergestellt. Dadurch können auch schwierige Geometrien des multifunktionalen Bauteils auf einfache Weise hergestellt werden. Weiterhin kann dadurch auch eine hohe Genauigkeit bei der Einhaltung der Toleranzen erreicht werden. Darüber hinaus ist ein mittels pulvermetallurgischen Verfahren hergestelltes Ventil in der Lage, auch höchste Anforderungen hinsichtlich der Druckbelastung zu erfüllen. Dies ist bei den bisher verwendeten Ventilen nicht gegeben, da diese noch Bauteile aus Kunststoff verwenden, wie beispielsweise das Drosselbauteil.

Besonders bevorzugt wird als pulvermetallurgisches Verfahren Sintern oder Pulverspritzguss verwendet.

Die erfindungsgemäßen Ventile werden vorzugsweise in Hydrauliksystemen von Fahrzeugen verwendet. Besonders bevorzugt werden erfindungsgemäße Ventile in ABS-Systemen und/oder ASR-Systemen und/oder anderen Fahrregelungs- bzw. Bremssystemen eines Fahrzeugs verwendet.

### Zeichnung

Nachfolgend wird ein bevorzugtes Ausführungsbeispiel der Erfindung unter Bezugnahme auf die Zeichnung beschrieben. In der Zeichnung ist:
- Figur 1: eine schematische Schnittansicht eines Ventils zum Steuern von Fluiden gemäß einem bevorzugten Ausführungsbeispiel der Erfindung und
- Figur 2: eine schematische Schnittansicht eines Ventils zum Steuern von Fluiden gemäß dem Stand der Technik.

### Beschreibung des Ausführungsbeispiels

Figur 1 zeigt ein Ventil 1 zum Steuern von Fluiden gemäß einem bevorzugten Ausführungsbeispiel der Erfindung.

Das Ventil 1 umfasst einen Anker 2, welcher in einer Hülse 4 mittels Bestromen einer Magnetspule 3 hin- und herbewegbar ist. Der Anker 2 ist mit einem Betätigungselement 5 in Form eines Stößels verbunden, so dass eine Öffnung bzw. ein Durchlass 14 freigegeben bzw. verschlossen werden kann. Eine Rückstellfeder 6 stellt eine Rückstellung des Betätigungselements 5 und des Ankers 2 in ihre Ausgangsstellung bereit. Um zu verhindern, dass Verunreinigungen wie z.B. kleine Metallspäne o.Ä. in das Ventil 1 gelangen können, sind weiterhin zwei Filter 9 und 10 vorgesehen.

Weiterhin umfasst das erfindungsgemäße Ventil 1 ein multifunktionales Bauteil 7. Im multifunktionalen Bauteil 7 sind mehrere Funktionen in einem Bauteil integriert. Genauer sind die Funktion eines Ventileinsatzes zum Führen des Betätigungselements 5, die Funktion eines Ventilkörpers, in welchem die freizugebende bzw. zu verschließende Öffnung 14 ausgebildet ist, und die Funktion eines Drosselbauteils integriert. Weiterhin umfasst das multifunktionale Bauteil 7 ein federloses Rückschlagventil 8, über welches ein eventuell auftretender Überdruck abgebaut werden kann.

Im stromlosen Zustand drückt die Rückstellfeder 6 das Betätigungselement 5 ständig gegen den Anker 2 und hält das Ventil somit geöffnet. Um das Ventil 1 zu schließen, wird die Magnetspule 3 bestromt und der Anker dadurch gegen die Rückseite des Betätigungselements 5 gedrückt, wodurch sich das Betätigungselement 5 entgegen der Federkraft der Rückstellfeder 6 axial bewegt und den Durchlass 14 verschließt.

Das multifunktionale Bauteil 7 des Magnetventils ist pulvermetallurgisch hergestellt und weist eine hohe Belastbarkeit auf, welche deutlich höher ist als die Belastbarkeit von Kunststoffteilen. Dabei kann durch das pulvermetallurgische Herstellverfahren auch die notwendige komplexe Geometrie des Drosselbauteils bei Einhaltung der notwendigen Toleranzwerte hergestellt werden. Weiterhin weist ein derart hergestelltes multifunktionales Bauteil 7 eine erhöhte Dichtheit auf, da weniger Dichtflächen zwischen den einzelnen Bauteilen des Ventils aufgrund der verringerten Teileanzahl vorhanden sind. Je nach Anwendungsfall des Ventils können dabei unterschiedlichste Metalllegierungen verwendet werden.

Das erfindungsgemäße Magnetventil 1 wird dabei bevorzugt im Hydrauliksystem eines ABS-Systems als 2/2-Magnetventil verwendet.

## Patentansprüche

1. Ventil zum Steuern von Fluiden, umfassend ein Schließelement (5) zum Verschließen bzw. Freigeben eines Durchlasses (14), ein Rückstellelement (6), um das Schließelement (5) in seine Ausgangsstellung zurückzustellen, einen beweglich angeordneten Anker (2), welcher mittels einer Ankerspule (3) bewegbar ist, und ein multifunktionales Bauteil (7), welches die Funktion eines Ventileinsatzes, die Funktion eines Ventilkörpers und die Funktion eines Drosselbauteils in einem einzigen Bauteil umfasst, **dadurch gekennzeichnet, dass** das multifunktionale Bauteil (7) mittels pulvermstallurgischer Verfahren hergestellt ist, und dass das multifunktionale Bauteil (7) weiterhin noch die Funktion eines Rückschlagventils (8) umfasst.

2. Ventil nach Anspruch 1, **dadurch gekennzeichnet, dass** das multifunktionale Bauteil (7) mittels Sintern hergestellt ist.

3. Ventil nach einem der vorhergehenden Ansprüche, **dadurch gekennzeichnet, dass** das Ventil in einem Hydrauliksystem in einem Fahrzeug verwendet wird.

4. Ventil nach Anspruch 3, **dadurch gekennzeichnet, dass** das Ventil in einem Bremssystem und/oder einem elektronischen Stabilitätssystem und/oder einer Antischlupfregelung verwendet wird.

## Claims

1. Valve for control of fluids, comprising a closing element (5) for closing and releasing a passage (14), a resetting element (6) for resetting the closing element (5) into its initial position, a movably arranged armature (2) which can be moved by means of an armature coil (3), and a multifunctional component (7) which comprises the function of a valve insert, the function of a valve body and the function of a throttle component in a single component, **characterized in that** the multifunctional component (7) is produced by means of a powder-metallurgical method, and, furthermore, the multifunctional component (7) also comprises the function of a non-return valve (8).

2. Valve according to Claim 1, **characterized in that** the multifunctional component (7) is produced by means of sintering.

3. Valve according to one of the preceding claims, **characterized in that** the valve is used in a hydraulic system in a vehicle.

4. Valve according to Claim 3, **characterized in that** the valve is used in a brake system and/or an electronic stability system and/or a traction control.

## Revendications

1. Soupape de commande de fluide comprenant un élément de fermeture (5) pour fermer ou libérer un passage (14), un élément de rappel (6) pour rappeler l'élément de fermeture (5) dans sa position de sortie, un induit (2), mobile, déplacé par une bobine d'induit (3) ainsi qu'un composant multifonctionnel (7) assurant la fonction d'un insert de soupape, la fonction d'un corps de soupape et la fonction d'un composant d'étranglement dans un seul composant,
**caractérisée en ce que**
le composant multifonctionnel (7) est fabriqué par un procédé de métallurgie des poudres et
le composant multifonctionnel (7) assure en outre également la fonction d'un clapet anti-retour (8).

2. Soupape selon la revendication 1,
**caractérisée en ce que**
le composant multifonctionnel (7) est fabriqué par frittage.

3. Soupape selon l'une des revendications précédentes,
**caractérisée en ce que**
la soupape est appliquée à un système hydraulique de véhicule.

4. Soupape selon la revendication 3,
**caractérisée en ce que**
la soupape est utilisée dans un système de frein et/ou dans un système de stabilisation électronique et/ou dans un système de régulation anti-patinage.
